# EUROPÄISCHE PATENTSCHRIFT

(11) **EP 4 050 394 B1**
(45) Veröffentlichungstag und Bekanntmachung des Hinweises auf die Patenterteilung: **09.04.2025**
(21) Anmeldenummer: 22157401.5
(22) Anmeldetag: 18.02.2022
(51) Int. Cl.: G02B 6/44

(54) **KABELABFANGVORRICHTUNG UND DAMIT AUSGESTATTETE VERTEILERVORRICHTUNG**
CABLE CATCHING DEVICE AND DISTRIBUTION DEVICE EQUIPPED THEREWITH
DISPOSITIF D'ARRÊT DE CÂBLE ET DISPOSITIF DISTRIBUTEUR ÉQUIPÉ DE CELUI-CI

(30) Priorität: 25.02.2021 DE 202021100960 U; 10.03.2021 DE 202021101196 U
(43) Veröffentlichungstag der Anmeldung: 31.08.2022
(73) Patentinhaber: Connect Com GmbH, 72644 Oberboihingen (DE)
(72) Erfinder:
(74) Vertreter: Patentanwälte Bregenzer und Reule Partnerschaftsgesellschaft mbB

(56) Entgegenhaltungen:
- EP-A1- 2 570 833
- DE-A1- 19 820 027
- US-A1- 2012 230 646
- US-A1- 2020 003 984

## Beschreibung

Die Erfindung betrifft eine Kabelabfangvorrichtung zum Abfangen mindestens eines Lichtwellenleiter-Kabels, wobei die Kabelabfangvorrichtung eine Kabelaufnahme zum Aufnehmen mindestens eines Kabels, gemäß dem Oberbegriff des Anspruchs 1.

Eine derartige Kabelabfangvorrichtung ist in EP 2 570 833 A1 erläutert.

Bei der Verteilervorrichtung handelt es sich beispielsweise um eine Spleißmuffe oder dergleichen, in die Lichtwellenleiter-Kabel eingeführt werden. Lichtwellenleiter-Kabel weisen regelmäßig Zugentlastungselemente auf, die bezüglich der Verteilervorrichtung zur Zugentlastung zu fixieren sind. Somit können an dem Kabel wirkende Zugkräfte wirksam abgefangen werden, ohne dass beispielsweise Verbindungen des Kabels, die bei der Verteilervorrichtung vorgesehen sind, mechanisch belastet werden.

Allerdings ist die Montage derartiger Kabelabfangvorrichtungen schwierig. Beispielsweise sind sogenannte Spleißmuffen häufig in beengten Räumen vorzufinden, so zum Beispiel Kabelschächten oder dergleichen, sodass die Montage einer Kabelabfangvorrichtung an der Verteilervorrichtung und die Montage des Lichtwellenleiter-Kabels an der Kabelabfangvorrichtung handwerklich schwierig sind. Es ist daher die Aufgabe der vorliegenden Erfindung, eine verbesserte Kabelabfangvorrichtung bereitzustellen.

Zur Lösung dieser Aufgabe ist eine Kabelabfangvorrichtung gemäß Anspruch 1 vorgesehen. Zur Lösung der Aufgabe ist ferner eine Verteilervorrichtung vorgesehen, die mindestens eine derartige Kabelabfangvorrichtung sowie eine Stützbasis zu deren Abstützung aufweist. Die Verteilervorrichtung ist beispielsweise als eine Spleißmuffe ausgestaltet. Die Verteilervorrichtung kann aber auch beispielsweise als ein Verteilerschrank oder Verteilergehäuse ausgestaltet sein. Beispielsweise ist die Verteilervorrichtung zur Anordnung in einem Außenbereich vorgesehen, zum Beispiel als Verteilerschrank. Die Verteilervorrichtung kann aber auch zur Anordnung in einem Innenbereich innerhalb eines Gebäudes vorgesehen sein. In diesem Fall ist die Verteilervorrichtung beispielsweise als Verteilergehäuse ausgestaltet.

Die Kabelabfangvorrichtung ermöglicht eine Zugentlastung des Lichtwellenleiter-Kabels, fängt also das Kabel sozusagen ab.

Ein Vorteil ergibt sich beispielsweise dadurch, dass die Verteilervorrichtung beispielsweise nur eine Stützbasis aufweisen muss, an der mehrere Kabelabfangvorrichtungen je nach Bedarf montierbar sind. So kann eine Kaskade von mehreren Kabelabfangvorrichtungen gebildet werden, indem eine erste Kabelabfangvorrichtung unmittelbar an der Stützbasis der Verteilervorrichtung montiert wird und mindestens eine zweite Kabelabfangvorrichtung an der ersten Kabelabfangvorrichtung montierbar ist. Selbstverständlich ist es vorteilhaft, wenn die zweite Kabelabfangvorrichtung dann wiederum mit ihrer Stützpartie eine Stützbasis für eine dritte Kabelabfangvorrichtung bereitstellt.

Mithin kann also die Erfindung auch eine Anordnung zweier oder mehrerer Kabelabfangvorrichtungen gemäß der Erfindung, insbesondere baugleicher Kabelabfangvorrichtungen gemäß der Erfindung, umfassen.

Vorteilhaft ist bei der Kabelabfangvorrichtung vorgesehen, dass sie einen Bodenkörper sowie von dem Bodenkörper seitlich abstehende Seitenschenkel aufweist. Die Seitenschenkel stehen vorzugsweise rechtwinkelig von dem Bodenkörper ab. Es ist aber auch möglich, dass die Seitenschenkel in einem größeren oder kleineren Winkel als einem rechten Winkel von dem Bodenkörper abstehen. Bevorzugt sind die Seitenschenkel zueinander parallel. Der Bodenkörper und die Seitenschenkel können beispielsweise eine U-förmige Gestalt bilden.

Es ist möglich, dass der Bodenkörper bezüglich der Längsachse länger ist als eine oder beide Seitenschenkel. Der Bodenkörper kann vor einen oder beide Seitenschenkel an einem oder beiden Längsenden bezüglich der Längsachse vorstehen.

Weiterhin ist es möglich, dass die die Seitenschenkel bezüglich der Längsachse unterschiedlich lang sind.

Die Seitenschenkel können konturgleich und/oder symmetrisch sein.

Die Seitenschenkel können aber auch verschiedene Konturen und/oder Geometrien aufweisen.

Die Kabelabfangvorrichtung ist vorzugsweise aus Metall oder hartem Kunststoff. Die Kabelabfangvorrichtung ist vorzugsweise als einstückiger Körper ausgebildet. Beispielsweise ist es vorteilhaft, wenn die Kabelabfangvorrichtung als ein Stanz-Biegeteil ausgestaltet ist.

Die Kabelabfangvorrichtung hat beispielsweise eine langgestreckte Gestalt Bevorzugt ist vorgesehen, dass die Befestigungspartie und die Stützpartie an zueinander winkeligen oder einander entgegengesetzten Seiten der Kabelabfangvorrichtung angeordnet sind. So können beispielsweise die Befestigungspartie und die Stützpartie an den Seitenschenkeln angeordnet sein. Es ist aber auch möglich, dass eines von der Befestigungspartie und der Stützpartie am Bodenkörper und das andere von Befestigungspartie und Stützpartie an einem der Seitenschenkel angeordnet sind.

Insbesondere die Konfiguration eines Grundkörpers der Kabelabfangvorrichtung dergestalt, dass er einen Bodenkörper sowie davon abstehende Seitenschenkel aufweist, ermöglicht die nachfolgende bevorzugte Ausführungsform.

Bevorzugt ist vorgesehen, dass die Kabelaufnahme als ein Aufnahmekanal zur Aufnahme des mindestens einen Lichtwellenleiter-Kabels ausgestaltet ist. Die Seitenschenkel können beispielsweise den Aufnahmekanal seitlich begrenzen. Der Bodenkörper bildet den Boden des Aufnahmekanals.

Der Aufnahmekanal kann sich über die gesamte Länge der Kabelabfangvorrichtung bezüglich ihrer Längsachse erstrecken. Bevorzugt ist der Aufnahmekanal jedoch kürzer, sodass beispielsweise die nachfolgende Ausgestaltung möglich ist.

Bevorzugt ist es, wenn sich der Aufnahmekanal über einen Teilbereich der Kabelabfangvorrichtung bezüglich deren Längsachse erstreckt und das Zugentlastungsfixiermittel bezüglich der Längsachse vor oder hinter dem Aufnahmekanal angeordnet ist.

Somit kann beispielsweise das in dem Aufnahmekanal aufgenommene Kabel noch einen Kabelmantel aufweisen, während im Bereich des Zugentlastungsfixiermittels der Mantel entfernt ist, sodass das Zugentlastungselement anhand der Zugentlastungsfixiermittel fixierbar ist.

Bevorzugt ist es, wenn die Befestigungspartie und/oder die Stützpartie Planflächen oder ebene Stützflächen aufweisen. Somit kann beispielsweise die Planfläche der Stützpartie die Planfläche der Befestigungspartie des zweiten Kanalkörpers abstützen. Ohne weiteres ist es vorteilhaft, wenn auch die Stützbasis der Verteilervorrichtung eine Planfläche zur Abstützung der Befestigungspartie bzw. deren Planfläche aufweist.

Bezüglich der Befestigungsformschlusskontur und der Stützformschlusskontur sind unterschiedliche Ausgestaltungen möglich. Bevorzugt ist es, wenn die mindestens eine Befestigungsformschlusskontur der Befestigungspartie einen Steckvorsprung und/oder eine Steckaufnahme umfasst. Ohne weiteres vorteilhaft ist es auch, wenn die mindestens eine Stützformschlusskontur der Stützpartie einen Steckvorsprung und/oder eine Steckaufnahme umfasst. Dabei ist es möglich, dass die Stützformschlusskontur beispielsweise ausschließlich Steckaufnahmen und die Befestigungsformschlusskontur ausschließlich Steckvorsprünge umfasst. Es ist aber auch möglich, dass beides vorhanden ist, d. h. dass beispielsweise die Stützformschlusskontur oder die Befestigungsformschlusskontur sowohl einen Steckvorsprung als auch eine Steckaufnahme aufweisen.

Dabei ist die Anordnung von Stützformschlusskonturen und Befestigungsformschlusskonturen vorzugsweise so getroffen, dass in jeweils zueinander passender Anzahl und geometrischer Anordnung bei den Stützformschlusskonturen und den Befestigungsformschlusskonturen Steckvorsprünge und Steckaufnahmen vorgesehen sind. Wenn also beispielsweise zwei Steckaufnahmen der einen Komponente von Befestigungsformschlusskonturen oder Stützformschlusskonturen in einem vorbestimmten räumlichen Abstand zueinander angeordnet sind, sind die dazu passenden Steckvorsprünge der anderen Komponente von Befestigungsformschlusskonturen oder Stützformschlusskonturen in demselben räumlichen Abstand zueinander angeordnet.

Vorteilhaft ist vorgesehen, dass die mindestens eine Befestigungsformschlusskontur mindestens zwei Steckvorsprünge und/oder Steckaufnahmen umfasst, die einen Abstand bezüglich der Längsachse der Kabelabfangvorrichtung und/oder quer zu der Längsachse der Kabelabfangvorrichtung aufweisen.

Ebenfalls vorteilhaft ist es, wenn die mindestens eine Stützformschlusskontur mindestens zwei Steckvorsprünge und/oder Steckaufnahmen umfasst, die einen Abstand bezüglich der Längsachse der Kabelabfangvorrichtung und/oder quer zu der Längsachse der Kabelabfangvorrichtung aufweisen.

Besonders bevorzugt ist es, wenn die mindestens eine Befestigungsformschlusskontur mindestens zwei Befestigungsformschlusskonturen umfasst, die entlang einer Reihenachse nebeneinander angeordnet sind. Bei den Befestigungsformschlusskonturen ist es insbesondere vorteilhaft, wenn die mindestens zwei entlang der Reihenachse angeordneten Befestigungsformschlusskonturen Steckvorsprünge sind.

Eine weitere vorteilhafte Ausführungsform sieht vor, dass die mindestens eine Stützformschlusskontur mindestens zwei Stützformschlusskonturen umfasst, die entlang einer Reihenachse nebeneinander angeordnet sind. In diesem Fall ist es vorteilhaft, wenn die mindestens zwei entlang der Reihenachse angeordneten Stützformschlusskonturen Steckaufnahmen sind.

Die jeweilige Reihenachse beiden vorgenannten Ausführungsformen verläuft vorzugsweise parallel zur Längsachse der Kabelabfangvorrichtung. Entlang der Längsachse verläuft das an der Kabelabfangvorrichtung gehaltene Lichtwellenleiter-Kabel, sodass die Ausrichtung des Kabels der Ausrichtung bzw. der Anordnung der Stützformschlusskonturen und der Befestigungsformschlusskonturen entspricht.

Ein vorteilhaftes Konzept sieht vor, dass die mindestens eine Befestigungsformschlusskontur mindestens einen Steckvorsprung umfasst, der vor die Kabelabfangvorrichtung parallel zu einer Bodenebene vor einen Grundkörper der Kabelabfangvorrichtung vorsteht, wobei ein Boden der Kabelaufnahme im Bereich der Bodenebene angeordnet ist. Beispielsweise steht der mindestens eine Steckvorsprung vor den Bodenkörper in dessen Ebene vor. Der Steckvorsprung ist vorzugsweise einstückig mit dem Bodenkörper.

Vorteilhaft ist weiterhin, wenn die mindestens eine Befestigungsformschlusskontur mindestens eine Steckaufnahme umfasst, die sich parallel zu einer Bodenebene in einen Grundkörper der Kabelabfangvorrichtung hinein erstreckt, wobei ein Boden der Kabelaufnahme im Bereich der Bodenebene angeordnet ist. Beispielsweise erstreckt sich die mindestens eine Steckaufnahme in den Bodenkörper, von dem die Seitenschenkel abstehen, hinein. Es ist auch möglich, dass die Steckaufnahme in einem Übergangsbereich, insbesondere einem Kantenbereich, zwischen dem Bodenkörper und einem von diesem abstehenden Seitenschenkel der Kabelabfangvorrichtung ausgebildet ist.

Die mindestens eine Befestigungsformschlusskontur umfasst insbesondere bezüglich eines Grundkörpers der Kabelabfangvorrichtung ortsfeste Formschlusskonturen, beispielweise mindestens einen Steckvorsprung und/oder mindestens eine Steckaufnahme. Es ist aber auch möglich, dass die mindestens eine Befestigungsformschlusskontur ein Montageelement umfasst, beispielsweise wie folgt:
Vorteilhaft ist es, wenn die mindestens eine Befestigungsformschlusskontur einen Befestigungsbolzen, insbesondere eine Schraube, umfasst. Anhand der vorgenannten Steckvorsprünge und Steckaufnahmen ist eine formschlüssige Abstützung quer zur Längsachse der Kabelabfangvorrichtung möglich, wobei ein jeweiliger Steckvorsprung und eine Steckaufnahme entlang einer Steckachse formschlüssig in Eingriff bringbar sind. Für eine zugfeste Verbindung der Kabelabfangvorrichtung an der Stützbasis oder einer anderen Kabelabfangvorrichtung bezüglich einer zu der Steckachse parallelen Verbindungsachse sorgt vorteilhaft der Befestigungsbolzen, insbesondere die Schraube.

An der Stützbasis ist vorteilhaft eine komplementäre Stützformschlusskontur, nämlich eine Aufnahme für den Befestigungsbolzen, insbesondere eine Schraubaufnahme für die Schraube, vorgesehen.

Vorteilhaft ist es, wenn die mindestens eine Stützformschlusskontur eine Bolzenaufnahme oder eine Schraubaufnahme zur Aufnahme eines Befestigungsbolzens umfasst.

Somit ist eine entsprechende Verschraubung der Kabelabfangvorrichtung an der Stützbasis oder an einer anderen Kabelabfangvorrichtung möglich.

An dieser Stelle sei erwähnt, dass ein vorteilhaftes Konzept vorsieht, dass eine Befestigung der Kabelabfangvorrichtung an der Stützbasis oder an einer anderen Kabelabfangvorrichtung nur eine einzige Schraubverbindung vorsieht, ansonsten jedoch mindestens eine oder ausschließlich Steckverbindungen zwischen der Kabelabfangvorrichtung und der Stützbasis oder zwischen zwei Kabelabfangvorrichtungen.

Vorteilhaft ist es, wenn die mindestens eine Befestigungsformschlusskontur der Befestigungspartie eine Durchstecköffnung für einen Befestigungsbolzen, insbesondere eine Schraube, umfasst. Der Bolzen kann also durch die Durchstecköffnung hin durch beispielsweise in die Stützbasis oder eine die Kabelabfangvorrichtung stützende andere Kabelabfangvorrichtung eingeschraubt werden.

Ein bevorzugtes Konzept sieht vor, dass die Durchstecköffnung quer zu einer Durchsteckachse, entlang derer der Befestigungsbolzen durch die Durchstecköffnung durchsteckbar ist, seitlich offen ist, sodass der Befestigungsbolzen quer zu der Durchsteckachse in die Durchstecköffnung einführbar ist. Der Befestigungsbolzen kann beispielsweise in die Stützbasis oder eine die Kabelabfangvorrichtung stützende andere Kabelabfangvorrichtung teilweise eingeschraubt sein, sodass die Durchstecköffnung quer zur Durchsteckachse oder Längsachse des Befestigungsbolzens in Eingriff mit dem Befestigungsbolzen bringbar ist.

Vorteilhaft ist es insbesondere, wenn eine Länge des Befestigungsbolzens derart ausgestaltet ist, dass der Befestigungsbolzen teilweise in die Stützbasis oder die die Kabelabfangvorrichtung stützende andere Kabelabfangvorrichtung einschraubbar ist derart, dass ein Ineingriffbringen der Durchstecköffnung mit dem Befestigungsbolzen möglich ist, ohne dass eine Steckaufnahme oder ein Steckvorsprung der Befestigungsformschlusskonturen mit einem Steckvorsprung oder einer Steckaufnahme an der Stützbasis oder der anderen Kabelabfangvorrichtung in Eingriff gelangt, wobei durch weiteres Einschrauben des Befestigungsbolzens der Steckvorsprung mit einer Steckaufnahme der Stützbasis oder der anderen Kabelabfangvorrichtung oder die Steckaufnahme mit einem Steckvorsprung der Stützbasis oder der anderen Kabelabfangvorrichtung in Eingriff bringbar ist.

Im Sinne einer einfachen Bedienung ist es, wenn die nachfolgende Maßnahme vorgesehen ist. Vorteilhaft ist es, wenn der Durchstecköffnung eine mit der Durchstecköffnung fluchtende Montagedurchtrittsöffnung gegenüberliegt, durch die hindurch der Befestigungsbolzen anhand eines Montagewerkzeugs betätigbar ist. Die Montagedurchtrittsöffnung ist vorteilhaft an der Stützpartie angeordnet. Ferner ist es zweckmäßig, wenn die Montagedurchtrittsöffnung die Stützpartie durchsetzt, beispielsweise einen der vorgenannten Seitenschenkel. Mithin können also beispielsweise die Durchstecköffnung für den Befestigungsbolzen am einen Seitenschenkel und die Montagedurchtrittsöffnung angeordnet sein.

Ein vorteilhaftes Konzept sieht vor, dass die mindestens eine Befestigungsformschlusskontur eine Verdrehsicherung bezüglich der Stützbasis bei einer Drehbetätigung des Befestigungsbolzens bildet oder aufweist.

Bevorzugt ist es, wenn die mindestens eine Befestigungskontur mindestens einen Steckvorsprung oder mindestens eine Steckaufnahme aufweist, wobei der mindestens eine Steckvorsprung oder die mindestens eine Steckaufnahme in einem Abstand zu der Durchstecköffnung für den Befestigungsbolzen zur Bildung einer Verdrehsicherung der Kabelabfangvorrichtung bezüglich der Stützbasis bei einer Drehbetätigung des Befestigungsbolzens angeordnet ist. Ohne weiteres ist es möglich, dass mehrere Steckvorsprünge und Steckaufnahmen vorhanden sind, sodass die Verdrehsicherung noch besser gelingt.

Wie bereits schon erwähnt ist es vorteilhaft, wenn mehrere Kabelabfangvorrichtungen aneinander montierbar sind, insbesondere in der Art einer Stufenanordnung oder Kaskade. Grundsätzlich möglich ist es aber auch, dass mehrere Kabelabfangvorrichtungen eine Art Stange oder Arm bilden. Ein solcher Arm oder eine solche Stange können beispielsweise von einer Stütze der Verteilervorrichtung, an der die Stützbasis für die sozusagen erste Kabelabfangvorrichtung angeordnet ist, abstehen.

Zur Realisierung derartiger Ausgestaltungen werden nachfolgend einige Möglichkeiten vorgestellt:
Die Erfindung sieht vor, dass die mindestens eine Befestigungsformschlusskontur und die mindestens eine Stützformschlusskontur zueinander komplementäre Befestigungsformschlusskonturen und Stützformschlusskonturen umfassen, sodass die Kabelabfangvorrichtung eine erste Kabelabfangvorrichtung zur formschlüssigen Verbindung mit einer baugleichen zweiten Kabelabfangvorrichtung bilden kann und die Befestigungsformschlusskonturen der einen Kabelabfangvorrichtung in die Stützformschlusskonturen der anderen Kabelabfangvorrichtung formschlüssig eingreifen können. Die Befestigungsformschlusskonturen und die Stützformschlusskonturen sorgen für eine formschlüssige Abstützung quer zu den jeweiligen Längsachsen der Kabelabfangvorrichtungen.

Prinzipiell möglich ist es, dass die Kabelabfangvorrichtungen, die derartig formschlüssig ineinander eingreifen und formschlüssig aneinandergehalten sind, sich entlang einer Reihenachse erstrecken, die beispielsweise parallel zu Steckachsen sind, entlang derer Steckvorsprünge und Steckaufnahmen der Befestigungsformschlusskonturen und Stützformschlusskonturen ineinander eingreifen.

Bevorzugt ist jedoch eine sozusagen kaskadenartige oder stufenartige Anordnung aneinander angeordneter Kabelabfangvorrichtungen. Eine solche kaskadenartige oder stufenartige Anordnung kann sich auch an die vorgenannte Konfiguration oder Anordnung anschließen, bei der zwei oder weitere Kabelabfangvorrichtungen nicht kaskadenartig oder stufenförmig aneinander angeordnet sind.

Dazu trägt die nachfolgende Maßnahme bei:
Erfindungsgemäß ist vorgesehen, dass die Befestigungsformschlusskonturen und die Stützformschlusskonturen einen Abstand parallel und/oder quer zu der Längsachse der Kabelabfangvorrichtung zueinander aufweisen, sodass die Kabelabfangvorrichtung und die zu dieser baugleiche zweite Kabelabfangvorrichtung eine Stufenanordnung bildend formschlüssig in Eingriff bringbar sind. Insbesondere vorteilhaft ist es, wenn die Befestigungsformschlusskonturen einen größeren Längsabstand bezüglich der Längsachse zu einer Einführseite der Kabelaufnahme als die Stützformschlusskonturen aufweisen.

Vorteilhaft ist es, wenn sich die Kabelaufnahme zwischen einander entgegengesetzten Längsendbereichen der Kabelabfangvorrichtung erstreckt. Die Kabelaufnahme kann jedoch zumindest über einen Teilabschnitt bezüglich der Längsachse quer zur Längsachse offen. Beispielsweise ist die Kabelaufnahme in einem derartigen Teilabschnitt lediglich durch einen Bodenkörper gebildet, an dem das Lichtwellenleiter-Kabel anliegen kann.

Für die Zugentlastung des Zugentlastungselements des Lichtwellenleiter-Kabels werden nachfolgend einige Möglichkeiten vorgestellt.

An dieser Stelle sei erwähnt, dass das Zugentlastungselement unterschiedliche Ausgestaltungen aufweisen kann. Beispielsweise kann das Zugentlastungselement ein sogenannter Zugentlastungsstrang oder dergleichen sein. Das Zugentlastungselement kann beispielsweise ein Stabkörper oder Stab sein, beispielsweise aus Aramid oder dergleichen anderem auf Zug belastbarem Material.

Es ist weiterhin möglich, dass das Zugentlastungselement ein Zugentlastungsgarn oder eine Zugentlastungsfaser umfasst. Das Zugentlastungsgarn oder die Zugentlastungsfasern umfasst beispielsweise Aramid-Fasern, Kohlefasern oder dergleichen.

Das Zugentlastungselement kann zentral in dem Lichtwellenleiter-Kabel angeordnet sein und ein sogenanntes Zentralelement oder eine Kabelseele bilden.

Bevorzugt ist es, wenn die Kabelabfangvorrichtung an unterschiedliche Ausgestaltungen eines Zugentlastungselements angepasst ist.

Es ist möglich, dass beispielsweise nur ein einziges, auf eine Art von Zugentlastungselement angepasstes Zugentlastungsfixiermitteln vorhanden ist, zum Beispiel zur Befestigung eines Zugentlastungsstrangs.

Es ist aber auch möglich, dass zwei oder mehrere Zugentlastungsfixiermittel vorhanden sind, die unterschiedlichen Ausgestaltungen eines Zugentlastungselements zugeordnet sind und an die unterschiedlichen Ausgestaltungen angepasst sind, so zum Beispiel ein erstes Zugentlastungsfixiermittel, dass an einen Zugentlastungsstrang angepasst ist, sowie ein zweites Zugentlastungsfixiermitteln, dass an ein Zugentlastungsgarn angepasst ist.

Bevorzugt ist es, wenn das Zugentlastungsfixiermittel eine Klemmeinrichtung umfasst.

Beispielsweise umfasst die Klemmeinrichtung einen zwischen einer Lösestellung und einer Klemmstellung verstellbaren Klemmkörper, wobei der Klemmkörper in der Lösestellung eine Klemmaufnahme der Klemmeinrichtung freigibt, sodass das Zugentlastungselement bezüglich der Klemmaufnahme beweglich ist, und in der Klemmstellung einen Steckquerschnitt der Klemmaufnahme zum Klemmen des Zugentlastungselements verengt.

Der Klemmkörper kann beispielsweise plattenartig sein, U-förmig sein oder dergleichen. Zur Betätigung des Klemmkörpers ist vorzugsweise eine Schraube oder ein Befestigungsbolzen vorgesehen. Insbesondere vorteilhaft ist es, wenn der Klemmkörper als eine Klemmschelle oder als ein Klemmbügel ausgestaltet ist.

Vorteilhaft ist es, wenn das Zugentlastungsfixiermittel eine Aufnahmekontur zur Aufnahme eines flexiblen Befestigungsbands, insbesondere eines Kabelbinders, umfasst. Die Aufnahmekontur kann beispielsweise eine Vertiefung umfassen. Die Aufnahmekontur kann auch als eine Taillierung an einem Grundkörper der Kabelabfangvorrichtung ausgestaltet sein. Die Aufnahmekontur ist insbesondere dazu vorgesehen und/oder ausgestaltet, dass das flexible Befestigungsband bezüglich der Längsachse der Kabelabfangvorrichtung verschiebefest fixierbar ist. Beispielsweise erstreckt sich die Aufnahmekontur quer zur Längsachse.

Vorteilhaft ist weiterhin, wenn die Kabelabfangvorrichtung mindestens eine Haltekontur zum Halten eines flexiblen Befestigungsbands aufweist, mit dem das Lichtwellenleiter-Kabel in der Kabelaufnahme fixierbar ist. Die Haltekontur kann beispielsweise eine Labyrinth-Aufnahme für das Befestigungsband, zum Beispiel den Kabelbinder, umfassen. Insbesondere ist die Halteaufnahme an dem Bodenkörper, von dem ein Seitenschenkel oder zwei Seitenschenkel abstehen, angeordnet.

Vorteilhaft ist es, wenn die mindestens eine Haltekontur und das Zugentlastungsfixiermittel bezüglich der Längsachse der Kabelabfangvorrichtung einen Abstand zueinander aufweisen.

Wenn zwei oder weitere Zugentlastungsfixiermitteln vorhanden sind, haben diese vorzugsweise ebenfalls einen Abstand bezüglich der Längsachse der Kabelabfangvorrichtung oder sind nebeneinander bezüglich der Längsachse angeordnet.

Vorteilhaft ist es weiterhin, wenn die mindestens eine Haltekontur und das Zugentlastungsfixiermittel bezüglich der Längsachse der Kabelabfangvorrichtung einander entgegengesetzten Längsendbereichen der Kabelabfangvorrichtung angeordnet sind. Somit kann also beispielsweise an einer Einführseite das Lichtwellenleiter-Kabel anhand eines Befestigungsbands und der Haltekontur an der Kabelabfangvorrichtung fixierbar sein, während im Bereich einer Auslassseite, an der die mindestens eine Ader des Lichtwellenleiter-Kabels aus der Kabelaufnahme heraus geführt ist, das mindestens eine Zugentlastungsfixiermittel angeordnet ist.

Die Verteilervorrichtung mit einer oder mehreren Kabelabfangvorrichtungen gemäß der Erfindung weist wie erläutert die Stützbasis oder mehrere Stützbasen für die Kabelabfangvorrichtung auf.

Vorteilhaft ist es, wenn an der Stützbasis mindestens eine Stützformschlusskontur zur formschlüssigen Aufnahme der mindestens einen Befestigungsformschlusskontur der Kabelabfangvorrichtung angeordnet ist.

Weiterhin vorteilhaft ist es, wenn an der Stützbasis mindestens zwei, insbesondere in einer Reihenrichtung nebeneinander angeordnete, Stützformschlusskonturen zur formschlüssigen Aufnahme der Befestigungsformschlusskonturen zweier Kabelabfangvorrichtungen angeordnet sind. Die Reihenrichtung oder Reihenachse verläuft vorzugsweise schräg bezüglich der Längsachsen der an der Stützbasis gehaltenen Kabelabfangvorrichtungen.

Vorteilhaft ist die Stützbasis an einem Träger angeordnet, der mehrere Halter für Verteilermodule zum Verteilen, insbesondere zum Verspleißen, von Lichtwellenleitern aufweist. Beispielsweise können die Verteilermodule fächerartig an dem Träger angeordnet sein.

Vorteilhaft ist es, wenn die Stützbasis an einer Stütze angeordnet ist, mit der der Träger für die Verteilermodule an einem Verteilergehäuse der Verteilervorrichtung, insbesondere einer Gehäusebasis des Verteilergehäuses, abgestützt ist. An der Stütze kann ein Vorsprung oder können mehrere Vorsprünge vorgesehen sein, wobei an einem jeweiligen Vorsprung eine Stützbasis für die Kabelabfangvorrichtung vorgesehen ist.

Die Gehäusebasis ist vorzugsweise durch einen Gehäusedeckel abgedeckt oder abdeckbar. In einem Innenraum des Verteilergehäuses ist der Träger angeordnet.

Nachfolgend wird ein Ausführungsbeispiel der Erfindung anhand der Zeichnung erläutert. Es zeigen:

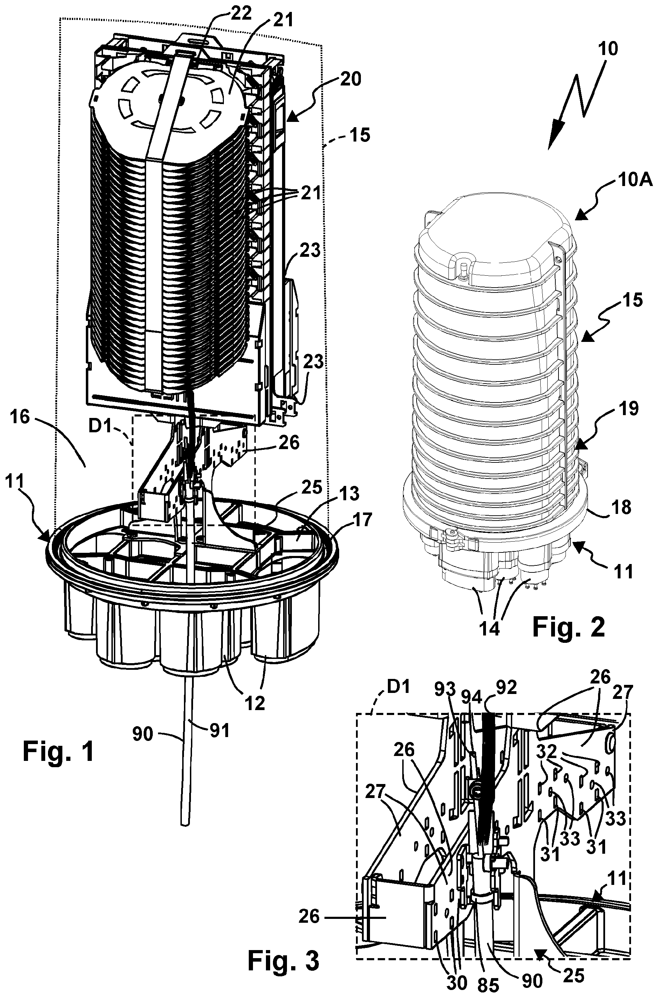

- Figur 1: eine Verteilervorrichtung in perspektivischer Schrägansicht in geöffnetem Zustand,
- Figur 2: die fatale Vorrichtung nach Figur 1, jedoch im geschlossenen Zustand,
- Figur 3: ein Detail D1 aus Figur 1 mit einer Kabelabfangvorrichtung,

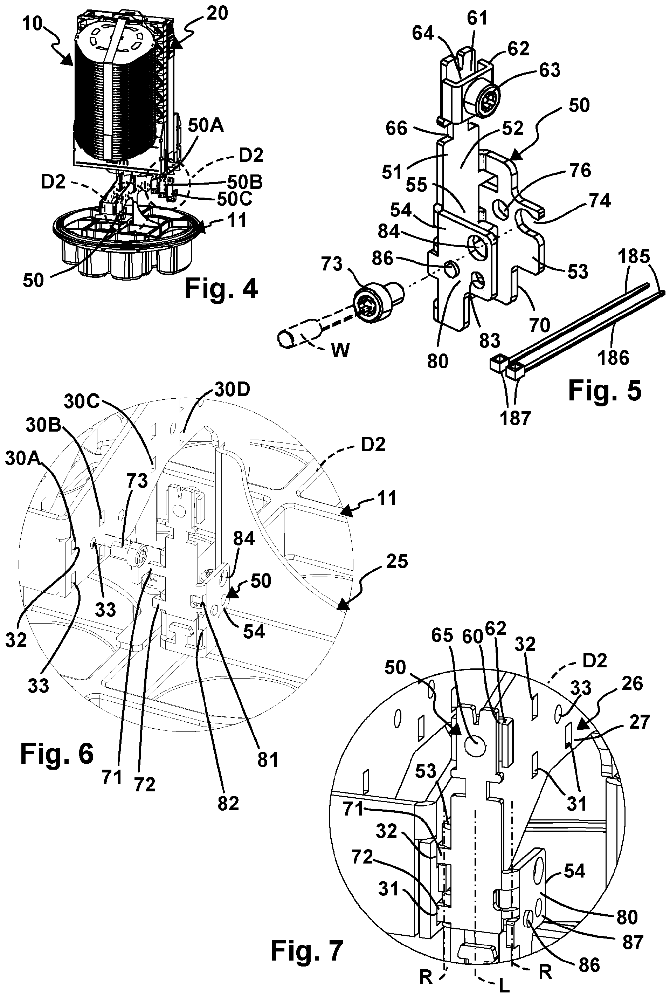

- Figur 4: die Verteilervorrichtung gemäß Figuren 1, 2 mit weiteren daran angeordneten Kabelabfangvorrichtungen,
- Figur 5: eine perspektivische Schrägansicht einer Kabelabfangvorrichtung,
- Figur 6: ein Detail D2 aus Figur 4 mit einer noch nicht an einer Haltepartie der Verteilervorrichtung montierten Kabelabfangvorrichtung,
- Figur 7: die Ansicht etwa entsprechend Figur 6, wobei die Kabelabfangvorrichtung an der Haltepartie montiert ist,
- Figur 8: ein Detail D3 aus Figur 4 mit mehreren Kabelabfangvorrichtungen, die noch nicht montiert sind und
- Figur 9: die Ansicht etwa entsprechend Figur 8, wobei die Kabelabfangvorrichtungen von der anderen einer der Ansicht gemäß Figur 8 entgegengesetzten Seite dargestellt sind.

Eine Verteilervorrichtung 10, beispielsweise eine Spleißmuffe 10A, weist eine Gehäusebasis 11, an der mehrere Kanalkörper 12, die jeweils eine Durchtrittsöffnung aufweisen, angeordnet sind. Durch die Durchtrittsöffnungen der Kanalkörper können Kabel, insbesondere Lichtwellenleiter-Kabel, in einen Innenraum 16 eines Verteilergehäuses 19 der Verteilervorrichtung 10 eingeführt werden.

Die Gehäusebasis 11 weist eine sie versteifende Rippenstruktur 13 auf.

Zum Verschließen der Verteilervorrichtung 10 ist ein Gehäusedeckel 15, beispielsweise eine Abdeckhaube, vorgesehen, die zusammen mit der Gehäusebasis 11 den Innenraum 16 der Verteilervorrichtung 10 dicht verschließt.

An einem Außenumfang der Gehäusebasis 11 ist ein Flanschvorsprung 17 vorgesehen, an dem im verschlossenen Zustand der Verteilervorrichtung 10 ein in der Zeichnung nicht näher bezeichneter Flanschvorsprung des Gehäusedeckels 15 gegenüberliegt. Die beiden Flanschvorsprünge stützen eine Spanneinrichtung 18 zum Verschließen der Verteilervorrichtung 10, insbesondere zum festen Verbinden der Gehäusebasis 11 mit dem Gehäusedeckel 15.

An der Gehäusebasis 11 ist ein Träger 20 angeordnet, an dem Verteilermodule 21 angeordnet oder anordenbar sind. Die Verteilermodule 21 dienen zum Verteilen, beispielsweise Verspleißen von Lichtwellenleitern. Die Verteilermodule 21 können beispielsweise Spleißmodule oder Spleißkassetten sein. Die Verteilermodule 21 sind an Haltern 22 des Trägers 20 gehalten, insbesondere schwenkbar gelagert. An dem Träger 20 ist weiterhin eine Leitungsführungsanordnung 23 zum Führen von Leitern, insbesondere Lichtwellenleitern, von und zu den Verteilermodulen 21 angeordnet.

Der Träger 20 ist anhand einer Stütze 25 an der Gehäusebasis 11 abgestützt. Die Stütze 25 ist an der Gehäusebasis 11 befestigt, insbesondere an der Rippenstruktur 13.

Von der Stütze 25 stehen Vorsprünge 26 mit Haltepartien 27 in der Art von Armen ab, die zur Befestigung von Kabeln, die in die Leitungsführungsanordnung 23 hinein geführt sind, dienen.

Eine der Stütze 25 zugewandte Partie der Leitungsführungsanordnung 23 ist beispielsweise ein sogenannter Mixer.

In einem jeweiligen Kanalkörper 12 ist jeweils eine Dichtungsvorrichtung 14 anordenbar oder angeordnet, die die Durchtrittsöffnung des Kanalkörpers verschließt und mindestens einen Kabelkanal zur Aufnahme eines Kabels aufweist, beispielsweise eines exemplarisch dargestellten Kabels 90. Das den Kabelkanal durchsetzende Kabel 90 ist aus einem Außenraum der Verteilervorrichtung 10 in deren Innenraum 16 hinein geführt, wobei die Dichtungsvorrichtung 14 den jeweiligen Kabelkanal um das Kabel 90 abdichtet.

Von der Stütze 25 stehen Vorsprünge 26 ab. An den Vorsprüngen 26 sind Stützbasen 27 zum Halten von Kabelabfangvorrichtungen 50 vorgesehen. An jeder Stützbasis 27 können mehrere Kabelabfangvorrichtungen 50 befestigt werden, wobei die Kabelabfangvorrichtungen 50 auch so ausgestaltet sind, dass sie aneinander befestigbar sind.

Die Kabelabfangvorrichtungen 50 weisen jeweils einen Grundkörper 51 auf. Der Grundkörper 51 bildet einstückig einen Bodenkörper 52, von dem Seitenschenkel 53, 54 abstehen. Die Seitenschenkel 53, 54 begrenzen eine Kabelaufnahme 55 zur Aufnahme des Lichtwellenleiter-Kabels 90.

Die Kabelaufnahme 55 erstreckt sich entlang einer Längsachse L der Kabelabfangvorrichtung 50.

Das Lichtwellenleiter-Kabel 90 weist einen Mantel 91 auf, in dem mehrere Adern 92, die jeweils einen oder mehrere Lichtwellenleiter umfassen, verlaufen. Die Lichtwellenleiter sind durch die Leitungsführungsanordnung 23 hin durch zu den Verteilermodulen 21 geführt. Insofern ist es wesentlich, eine Zugbelastung, die auf das Kabel 90 wirkt, nicht auf die im Innenraum 16 verlaufenden Komponenten des Kabels 90, also die Adern 92 und die Lichtwellenleiter wirkt.

An einer Einführseite 56 der Kabelaufnahme 55 ist eine Haltekontur 57 vorgesehen, die zum Halten eines flexiblen Befestigungsbands 185, beispielsweise eines Kabelbinders, geeignet ist. Die Haltekontur 57 umfasst beispielsweise einen T-förmigen Vorsprung, der in der Ebene des Bodenkörpers 52 angeordnet ist und der eine Art Labyrinth zur Aufnahme des Befestigungsbands 185 bereitstellt. Das Befestigungsband 185 weist beispielsweise ein Band 186 auf, welches in die Haltekontur 187 eingefädelt werden kann und anschließend das Kabel 90 umschlingend in eine Band-Aufnahme 187 des Befestigungsbands 185 eingesteckt werden, die das Band 186 in bekannter Weise zugfest fixiert. Dadurch ist das Kabel 90 bezüglich der Längsachse L an sich zugfest festgelegt, wobei jedoch das Befestigungsband 185 auch auf Adern 92, die in dem Mantel 91 des Kabels 90 angeordnet sind, einwirkt. Dementsprechend ist eine effektive Zugentlastung des Kabels 90 bezüglich der Verteilervorrichtung 10 in Bezug auf die Längsachse L durch das Befestigungsband 185, welches in der Haltekontur 57 aufgenommen ist, noch nicht realisierbar.

An einem vor die Kabelaufnahme 55 vorstehenden Abschnitt des Kabels 90 ist der Mantel 91 entfernt, sodass die Adern 92 frei zur Verteilung im Innenraum 16 der Verteilervorrichtung 10 liegen. Ebenfalls frei liegend ist in diesem Bereich ein Zugentlastungselement 93.

Dieses Zugentlastungselement 93 dient zur effektiven Zugentlastung des Kabels 90 bezüglich der Kabelabfangvorrichtung 50. Das Zugentlastungselement 93 ist beispielsweise ein Zentralelement oder Zugentlastungsstrang 94.

Zur zugfesten Befestigung des Kabels 90 bezüglich der Längsachse L und somit der Längserstreckung des Kabels 90 dienen Zugentlastungsfixiermittel 60. Die Zugentlastungsfixiermittel 60 umfassen beispielsweise eine Klemmeinrichtung 61. Die Klemmeinrichtung 61 umfasst einen Klemmkörper 62, der durch einen Betätigungskörper 63, beispielsweise einen Schraubbolzen, zwischen einer Klemmstellung und einer Lösestellung verstellbar ist. Beispielsweise ist der Klemmkörper in der Art einer Klemmschelle oder eines Klemmbügels ausgestaltet, der von dem Betätigungskörper 63 durchsetzt ist. Der Betätigungskörper 63 ist beispielsweise in den Grundkörper 51 der Kabelabfangvorrichtung 50, insbesondere deren Bodenkörper 52 eingeschraubt oder einschraubbar, wofür eine Schraubaufnahme 65 vorgesehen ist. Der Bodenkörper 52 sowie der Klemmkörper 62 begrenzen eine Klemmaufnahme 64, in die das Zugentlastungselement 93 einführbar ist. Das Zugentlastungselement 93 ist beispielsweise ein Zentralorgan, insbesondere ein stabförmiger Körper. Wenn die Klemmeinrichtung 61 durch Betätigung des Betätigungskörpers 63 in die Klemmstellung verstellt wird, ist das Zugentlastungselement 93 in der Klemmaufnahme geklemmt.

Die Zugentlastungsfixiermittel 60 umfassen vorteilhaft weiterhin eine Aufnahmekontur 66 zur Aufnahme eines weiteren Befestigungsbands 185. Das Befestigungsband 185 kann beispielsweise das Zugentlastungselement 93 oder ein in der Zeichnung nicht dargestelltes alternatives Zugentlastungselement in Gestalt beispielsweise von Fasern oder Garn klemmen. Die Aufnahmekontur 66 umfasst beispielsweise an einander entgegengesetzten Seiten des Bodenkörpers 52 angeordnete Vertiefungen oder Aufnahmen, deren Breite vorzugsweise so ausgestaltet ist, dass sie der Querbreite des Befestigungsbands 185 entsprechen.

An von der Kabelaufnahme 55 abgewandten Seiten der Seitenschenkel 53, 54 sind eine Befestigungspartie 70 sowie eine Stützpartie 80 vorgesehen. Die Befestigungspartie 70 dient zur Befestigung einer Kabelabfangvorrichtung 50 an der Stützbasis 57 oder einer anderen Kabelabfangvorrichtung 50. Die Stützpartie 80 hingegen dient zur Abstützung einer weiteren Kabelabfangvorrichtung 50.

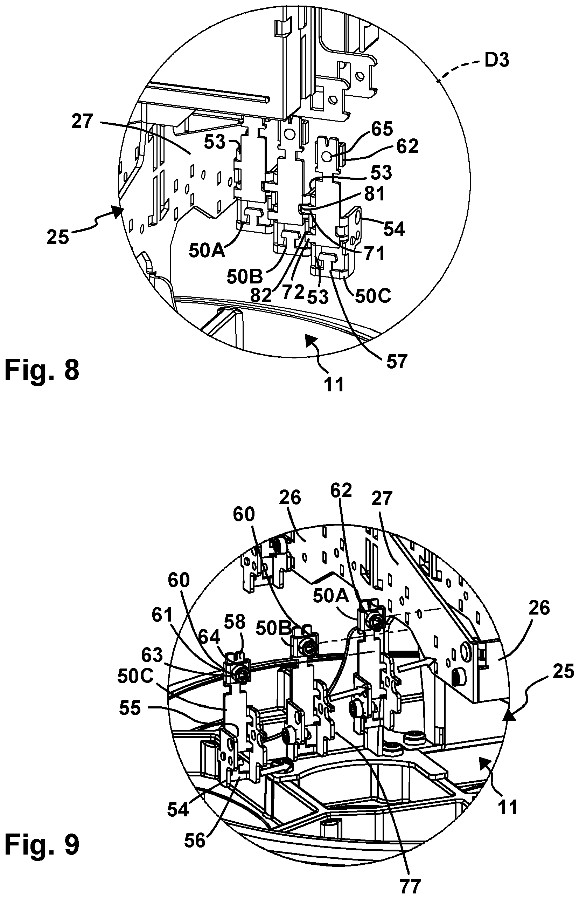

So kann beispielsweise wie in Figur 8 dargestellt eine Kabelabfangvorrichtung 50A unmittelbar an der Stützbasis 27 befestigt werden, die ihrerseits wiederum mit ihrer Stützpartie 80 eine weitere Kabelabfangvorrichtung 50B abstützt, an der wiederum eine Kabelabfangvorrichtung 50C abgestützt ist. Somit ist Reihenanordnung, insbesondere eine Stufenanordnung oder Kaskade, von Kabelabfangvorrichtungen 50 an der Stütze 25 der Verteilervorrichtung 10 herstellbar.

An der Stützpartie 80 ist eine Stützfläche 87 und an der Befestigungspartie 70 ist eine Stützfläche 77 vorgesehen. Beispielsweise kann die Stützfläche 77 flächig an der Oberfläche der Stützbasis 27 oder der Stützfläche 87 anliegen.

Die Montage der Kabelabfangvorrichtungen 50 an der Verteilervorrichtung 10 sowie einer der Kabelabfangvorrichtungen 50 an einer anderen Kabelabfangvorrichtungen 50 gelingt sehr einfach, was nachfolgend deutlich wird:
Beispielsweise sind an der Stützbasis 27 Stützformschlusskonturen 30 in Gestalt von Steckaufnahmen 31, 32 sowie einer Schraubaufnahme 33 angeordnet, die zum formschlüssigen Eingriff von Befestigungsformschlusskonturen 75 der Befestigungspartie 70 dienen.

Die Befestigungsformschlusskonturen 75 umfassen beispielsweise Steckvorsprünge 71, 72, die formschlüssig in die Steckaufnahmen 31, 32 einsteckbar sind.

Die Steckvorsprünge 71, 72 sind in einer Reihenachse R nebeneinander angeordnet. Die Reihenachse R verläuft parallel zur Längsachse L.

Bevorzugt sind die Steckvorsprünge 71, 72 einstückig mit dem Bodenkörper 52 und erstrecken sich quer zur Längsachse L vor den Seitenschenkel 53 vor.

Weiterhin umfassen die Befestigungsformschlusskonturen 75 einen Befestigungsbolzen 73 sowie eine Durchstecköffnung 74, durch die der Befestigungsbolzen 73 durchsteckbar ist. Ein Kopf des Befestigungsbolzens 52 stützt sich dabei an der von der Stützfläche 77 abgewandten Seite des Seitenschenkels 53 ab.

Die Durchstecköffnung 74 ist an einer von dem Bodenkörper 52 abgewandten Seite oder zur freien Seite des Seitenschenkels 53 hin offen, sodass die Durchstecköffnung 74 quer zur Längsachse des Befestigungsbolzens 73 in Eingriff mit dem Befestigungsbolzen 73 bringbar ist.

Eine bequeme Montage sieht dementsprechend vor sieht die also der Befestigungsbolzen 73 zunächst nur teilweise in die Schraubaufnahme 33 eingeschraubt ist, wenn die Durchstecköffnung 74 in Eingriff mit dem Befestigungsbolzen 73 gebracht wird derart, dass die Steckvorsprünge 71, 72 den Steckaufnahmen 31, 32 gegenüberliegen. Sodann kann der Befestigungsbolzen 73 weiter in die Schraubaufnahme 33 eingeschraubt werden, wodurch auch die Steckvorsprünge 71, 72 in die Steckaufnahmen 31, 32 eindringen.

Um diese einfache Montage auch dann zu gewährleisten, wenn zwei Kabelabfangvorrichtungen 50 aneinander befestigt werden sollen, ist die Stützpartie 80 sozusagen komplementär zur Befestigungspartie 70 ausgestaltet.

An der Stützpartie 80 sind Steckaufnahmen 81, 82 zum Eingriff von Steckvorsprüngen 71, 72 einer weiteren Kabelabfangvorrichtung 50 vorgesehen, also beispielsweise an der Stützpartie 80 der Kabelabfangvorrichtung 50A Steckaufnahmen 81, 82 für die Steckvorsprünge 71, 72 der Kabelabfangvorrichtung 50B.

Weiterhin ist an der Stützpartie 80 eine Schraubaufnahme 83 für den Befestigungsbolzen 73 vorgesehen.

Die Schraubaufnahme 83 sowie die Steckaufnahmen 81, 82 weisen in Bezug auf die Längsachse L einen Abstand zu den Steckvorsprüngen 71, 72 sowie der Durchstecköffnung 74 auf. Somit kann eine kaskadenartige oder stufenartige Anordnung von Kabelabfangvorrichtungen 50 entsprechend Figur 8 und 9 hergestellt werden.

Die Steckaufnahmen 81, 82 sowie die Schraubaufnahme 83 bilden Stützformschlusskonturen 85, die zum formschlüssigen Abstüzen und Ineingriffbringen der Befestigungsformschlusskonturen 75 geeignet sind.

Bevorzugt ist an der Stützpartie 80 bzw. dem Seitenschenkel 54 eine Montagedurchtrittsöffnung 84 vorgesehen, durch die hindurch ein Montagewerkzeug W, beispielsweise ein Schraubendreher, zum Drehbetätigen des Befestigungsbolzens 73 vorhanden. Die Montagedurchtrittsöffnung 84 fluchtet mit der Durchstecköffnung 74.

Weitere Befestigungsformschlusskonturen und Stützformschlusskonturen werden optional durch eine Zentrieraufnahme 76 an der Befestigungspartie 70 sowie einen Zentriervorsprung 86 an der Stützpartie 80 gebildet.

Die Zentrieraufnahme 76 ist an der Stützfläche 77 angeordnet. Der Zentriervorsprung 86 ist an der Stützfläche 87 angeordnet und greift im Sinne eines Zentrierens in die Zentrieraufnahme 76 ein, wenn die Stützpartie 80 und die Befestigungspartie 70 aneinander anliegen.

Der Zentriervorsprung 86 und die Steckaufnahmen 81, 82 weisen unterschiedliche Querabstände zu der Längsachse L auf. Die Zentrieraufnahme 76 und die Steckvorsprünge 71, 72 weisen dieselben Querabschnitte zur Längsachse L auf. Somit können die ineinander eingreifenden Steckvorsprünge und Steckaufnahmen bzw. Zentriervorsprünge und Zentrieraufnahmen eine Verdrehsicherung bereitstellen, wenn der Befestigungsbolzen 73 in die Schraubaufnahme 33 oder 83 eingeschraubt wird.

## Patentansprüche

1. Kabelabfangvorrichtung zum Abfangen mindestens eines Lichtwellenleiter-Kabels (90), wobei die Kabelabfangvorrichtung (50) eine Kabelaufnahme (55) zum Aufnehmen mindestens eines Kabels (90), wobei das Kabel (90) mindestens eine Ader (92) mit Lichtwellenleitern und mindestens ein sich entlang einer Längserstreckung des Kabels (90) erstreckendes Zugentlastungselement (93) aufweist, wobei sich die Kabelaufnahme (55) entlang einer Längsachse (L) der Kabelabfangvorrichtung (50) erstreckt, wobei die Kabelabfangvorrichtung (50) ein Zugentlastungsfixiermittel (60) zum zugfesten Fixieren des mindestens einen Zugentlastungselements (93) bezüglich der Längsachse (L) der Kabelabfangvorrichtung (50) aufweist, wobei die Kabelabfangvorrichtung (50) eine Befestigungspartie (70) mit mindestens einer Befestigungsformschlusskontur (75) zum formschlüssigen Abstützen der Kabelabfangvorrichtung (50) quer zu ihrer Längsachse (L) an einer Stützbasis (27), insbesondere einer Verteilervorrichtung (10), aufweist, wobei sie eine von der Befestigungspartie (70) separate Stützpartie (80) zur Abstützung einer zweiten Kabelabfangvorrichtung (50) aufweist, die eine sich entlang ihrer Längsachse (L) erstreckende Kabelaufnahme (55) für ein Lichtwellenleiter-Kabel (90) aufweist, wobei an der Stützpartie (80) mindestens eine Stützformschlusskontur (85) zum formschlüssigen Abstützen der zweiten Kabelabfangvorrichtung (50) quer zu deren Längsachse (L) angeordnet ist, und wobei die mindestens eine Befestigungsformschlusskontur (75) und die mindestens eine Stützformschlusskontur (85) zueinander komplementäre Befestigungsformschlusskonturen (75) und Stützformschlusskonturen (85) umfassen, sodass die Kabelabfangvorrichtung eine erste Kabelabfangvorrichtung (50A) zur formschlüssigen Verbindung mit einer baugleichen zweiten Kabelabfangvorrichtung (50B) bilden kann und die Befestigungsformschlusskonturen (75) der einen Kabelabfangvorrichtung (50B) in die Stützformschlusskonturen (85) der anderen Kabelabfangvorrichtung (50A) formschlüssig eingreifen können, **dadurch gekennzeichnet, dass** die Befestigungsformschlusskonturen (75) und die Stützformschlusskonturen (85) einen Abstand parallel und/oder quer zu der Längsachse (L) der Kabelabfangvorrichtung (50) zueinander aufweisen, sodass die Kabelabfangvorrichtung (50A) und die zu dieser baugleiche zweite Kabelabfangvorrichtung (50B) eine Stufenanordnung bildend formschlüssig in Eingriff bringbar sind.

2. Kabelabfangvorrichtung (50) nach Anspruch 1, **dadurch gekennzeichnet, dass** sie einen Bodenkörper (52) sowie von dem Bodenkörper (52) seitlich abstehende Seitenschenkel (53, 54) aufweist und/oder dass die Befestigungspartie (70) und die Stützpartie (80) an zueinander winkeligen oder einander entgegengesetzten Seiten der Kabelabfangvorrichtung angeordnet sind, wobei die Befestigungspartie (70) und die Stützpartie (80) vorteilhaft an den Seitenschenkeln (53, 54) angeordnet sind.

3. Kabelabfangvorrichtung nach Anspruch 1 oder 2, **dadurch gekennzeichnet, dass** die Kabelaufnahme (55) als ein Aufnahmekanal zur Aufnahme des mindestens einen Lichtwellenleiter-Kabels (90) ausgestaltet ist und/oder dass die Befestigungspartie (70) und/oder die Stützpartie (80) Planflächen oder ebene Stützflächen (77, 87) aufweisen und/oder dass die mindestens eine Befestigungsformschlusskontur (75) der Befestigungspartie (70) einen Steckvorsprung (71, 72) und/oder eine Steckaufnahme (81, 82) umfasst und/oder dass die mindestens eine Stützformschlusskontur (85) der Stützpartie (80) einen Steckvorsprung (71, 72) und/oder eine Steckaufnahme (81, 82) umfasst.

4. Kabelabfangvorrichtung nach Anspruch 3 **dadurch gekennzeichnet, dass** die mindestens eine Befestigungsformschlusskontur (75) mindestens zwei Steckvorsprünge (71, 72) und/oder Steckaufnahmen (81, 82) umfasst, die einen Abstand bezüglich der Längsachse (L) der Kabelabfangvorrichtung und/oder quer zu der Längsachse (L) der Kabelabfangvorrichtung aufweisen, und/oder dass die mindestens eine Stützformschlusskontur (85) mindestens zwei Steckvorsprünge (71, 72) und/oder Steckaufnahmen (81, 82) umfasst, die einen Abstand bezüglich der Längsachse (L) der Kabelabfangvorrichtung (50) und/oder quer zu der Längsachse (L) der Kabelabfangvorrichtung aufweisen.

5. Kabelabfangvorrichtung nach einem der vorhergehenden Ansprüche, **dadurch gekennzeichnet, dass** die mindestens eine Befestigungsformschlusskontur (75) mindestens zwei Befestigungsformschlusskonturen (75) umfasst, die entlang einer, insbesondere parallel zur Längsachse (L) der Kabelabfangvorrichtung verlaufenden, Reihenachse (R) nebeneinander angeordnet sind, wobei vorteilhaft vorgesehen ist, dass die mindestens zwei entlang der Reihenachse (R) angeordneten Befestigungsformschlusskonturen (75) Steckvorsprünge (71, 72) sind.

6. Kabelabfangvorrichtung nach einem der vorhergehenden Ansprüche, **dadurch gekennzeichnet, dass** die mindestens eine Stützformschlusskontur (85) mindestens zwei Stützformschlusskonturen (85), insbesondere Steckaufnahmen (81, 82), umfasst, die entlang einer, insbesondere parallel zur Längsachse (L) der Kabelabfangvorrichtung verlaufenden, Reihenachse (R) nebeneinander angeordnet sind.

7. Kabelabfangvorrichtung nach einem der vorhergehenden Ansprüche, **dadurch gekennzeichnet, dass** die mindestens eine Befestigungsformschlusskontur (75) mindestens einen Steckvorsprung (71, 72) umfasst, der vor die Kabelabfangvorrichtung (50) parallel zu einer Bodenebene vor einen Grundkörper der Kabelabfangvorrichtung (50) vorsteht, wobei ein Boden der Kabelaufnahme (55) im Bereich der Bodenebene angeordnet ist, und/oder dass die mindestens eine Befestigungsformschlusskontur (75) mindestens eine Steckaufnahme (81, 82) umfasst, die sich parallel zu einer Bodenebene in einen Grundkörper der Kabelabfangvorrichtung (50) hinein erstreckt, wobei ein Boden der Kabelaufnahme (55) im Bereich der Bodenebene angeordnet ist, und/oder dass die mindestens eine Befestigungsformschlusskontur (75) einen Befestigungsbolzen (73), insbesondere eine Schraube, umfasst und/oder dass die mindestens eine Befestigungsformschlusskontur (75) der Befestigungspartie (70) eine Durchstecköffnung (74) für einen Befestigungsbolzen (73), insbesondere eine Schraube, umfasst, wobei vorteilhaft vorgesehen ist, dass die Durchstecköffnung (74) quer zu einer Durchsteckachse, entlang derer der Befestigungsbolzen durch die Durchstecköffnung (74) durchsteckbar ist, seitlich offen ist, sodass der Befestigungsbolzen (73) quer zu der Durchsteckachse in die Durchstecköffnung (74) einführbar ist, und/oder dass der Durchstecköffnung (74) eine mit der Durchstecköffnung (74) fluchtende, insbesondere an der Stützpartie (80) angeordnete und/oder die Stützpartie (80) durchsetzende, Montagedurchtrittsöffnung (84) gegenüberliegt, durch die hindurch der Befestigungsbolzen (73) anhand eines Montagewerkzeugs betätigbar ist.

8. Kabelabfangvorrichtung nach einem der vorhergehenden Ansprüche, **dadurch gekennzeichnet, dass** die mindestens eine Befestigungsformschlusskontur (75) mindestens einen Steckvorsprung (71, 72) oder mindestens eine Steckaufnahme (81, 82) aufweist, wobei der mindestens eine Steckvorsprung (71, 72) oder die mindestens eine Steckaufnahme (81, 82) in einem Abstand zu der Durchstecköffnung (74) für den Befestigungsbolzen (73) zur Bildung einer Verdrehsicherung der Kabelabfangvorrichtung bezüglich der Stützbasis (27) bei einer Drehbetätigung des Befestigungsbolzens (73) angeordnet ist, und/oder dass eine Länge des Befestigungsbolzens (73) derart ausgestaltet ist, dass der Befestigungsbolzen (73) teilweise in die Stützbasis (27) oder die die Kabelabfangvorrichtung (50) stützende andere Kabelabfangvorrichtung (50) einschraubbar ist derart, dass ein Ineingriffbringen der Durchstecköffnung (74) mit dem Befestigungsbolzen (73) möglich ist, ohne dass eine Steckaufnahme (81, 82) oder ein Steckvorsprung (71, 72) der Befestigungsformschlusskonturen (75) mit einem Steckvorsprung (71, 72) oder einer Steckaufnahme (81, 82) an der Stützbasis (27) oder der anderen Kabelabfangvorrichtung (50) in Eingriff gelangt, wobei durch weiteres Einschrauben des Befestigungsbolzens (73) der Steckvorsprung (71, 72) mit einer Steckaufnahme (81, 82) der Stützbasis (27) oder der anderen Kabelabfangvorrichtung (50) oder die Steckaufnahme (81, 82) mit einem Steckvorsprung (71, 72) der Stützbasis (27) oder der anderen Kabelabfangvorrichtung (50) in Eingriff bringbar ist.

9. Kabelabfangvorrichtung nach einem der vorhergehenden Ansprüche, **dadurch gekennzeichnet, dass** die mindestens eine Stützformschlusskontur (85) eine Bolzenaufnahme oder eine Schraubaufnahme (33, 83) zur Aufnahme eines Befestigungsbolzens (73) umfasst.

10. Kabelabfangvorrichtung nach einem der vorhergehenden Ansprüche, **dadurch gekennzeichnet, dass** sich die Kabelaufnahme (55) zwischen einander entgegengesetzten Längsendbereichen der Kabelabfangvorrichtung (50) erstreckt.

11. Kabelabfangvorrichtung nach einem der vorhergehenden Ansprüche, **dadurch gekennzeichnet, dass** das Zugentlastungsfixiermittel (60) eine Klemmeinrichtung (61) umfasst, wobei vorteilhaft vorgesehen ist, dass die Klemmeinrichtung (61) einen zwischen einer Lösestellung und einer Klemmstellung verstellbaren, insbesondere als eine Klemmschelle oder als ein Klemmbügel ausgestalteten, Klemmkörper (62) umfasst, wobei der Klemmkörper (62) in der Lösestellung eine Klemmaufnahme (64) der Klemmeinrichtung (61) freigibt, sodass das Zugentlastungselement (93) bezüglich der Klemmaufnahme (64) beweglich ist, und in der Klemmstellung einen Steckquerschnitt der Klemmaufnahme (64) zum Klemmen des Zugentlastungselements (93) verengt.

12. Kabelabfangvorrichtung nach einem der vorhergehenden Ansprüche, **dadurch gekennzeichnet, dass** das Zugentlastungsfixiermittel (60) eine Aufnahmekontur (66) zur Aufnahme eines flexiblen Befestigungsbands (185), insbesondere eines Kabelbinders, umfasst und/oder dass sie mindestens eine Haltekontur (57) zum Halten eines flexiblen Befestigungsbands (185) aufweist, mit dem das Lichtwellenleiter-Kabel (90) in der Kabelaufnahme (55) fixierbar ist, wobei vorteilhaft vorgesehen ist, dass die mindestens eine Haltekontur (57) und das Zugentlastungsfixiermittel (60) bezüglich der Längsachse (L) der Kabelabfangvorrichtung (50) einen Abstand zueinander aufweisen und/oder die mindestens eine Haltekontur (57) und das Zugentlastungsfixiermittel (60) bezüglich der Längsachse (L) der Kabelabfangvorrichtung (50) einander entgegengesetzten Längsendbereichen der Kabelabfangvorrichtung (50) angeordnet sind.

13. Verteilervorrichtung (10) mit einer Kabelabfangvorrichtung nach einem der vorhergehenden Ansprüche, wobei die Verteilervorrichtung (10) die Stützbasis (27) für die Kabelabfangvorrichtung (50) aufweist.

14. Verteilervorrichtung (10) nach Anspruch 13, **dadurch gekennzeichnet, dass** an der Stützbasis (27) mindestens eine Stützformschlusskontur (830) zur formschlüssigen Aufnahme der mindestens einen Befestigungsformschlusskontur (75) der Kabelabfangvorrichtung (50) angeordnet ist und/oder dass an der Stützbasis (27) mindestens zwei, insbesondere in einer Reihenrichtung nebeneinander angeordnete, Stützformschlusskonturen (30), insbesondere mindestens eine Steckaufnahme (31, 32) und/oder mindestens eine Schraubaufnahme (33), zur formschlüssigen Aufnahme der Befestigungsformschlusskonturen (75) zweier Kabelabfangvorrichtungen (50) angeordnet sind und/oder dass sie als eine Spleißmuffe ausgestaltet ist oder eine Spleißmuffe aufweist und/oder dass sie als ein Verteilerschrank ausgestaltet ist oder einen Verteilerschrank aufweist und/oder dass sie als ein Verteilergehäuse ausgestaltet ist oder ein Verteilergehäuse aufweist.

15. Verteilervorrichtung nach einem der Ansprüche 13 oder 14, **dadurch gekennzeichnet, dass** die Stützbasis (27) an einem Träger (20) angeordnet ist, der mehrere Halter für Verteilermodule (21) zum Verteilen, insbesondere zum Verspleißen, von Lichtwellenleitern aufweist, wobei vorteilhaft vorgesehen ist, dass die Stützbasis (27) an einer Stütze angeordnet ist, mit der der Träger (20) für die Verteilermodule (21) an einem Verteilergehäuse (19) der Verteilervorrichtung (10), insbesondere einer Gehäusebasis (11) des Verteilergehäuses (19), abgestützt ist.

## Claims

1. Cable catching device for catching at least one optical fibre cable (90), wherein the cable catching device (50) has a cable receptor (55) for receiving at least one cable (90), wherein the cable (90) has at least one strand (92) with optical fibres and at least one strain relief element (93) extending along a longitudinal elongation of the cable (90), wherein the cable receptor (55) extends along a longitudinal axis (L) of the cable catching device (50), wherein the cable catching device (50) has a strain relief grip (60) for the high-tensile fixing of the at least one strain relief element (93) in relation to the longitudinal axis (L) of the cable catching device (50), wherein the cable catching device (50) has an attachment section (70) with at least one attachment form-fitting contour (75) for the form-fitting support of the cable catching device (50) transversely to its longitudinal axis (L) on a support base (27), in particular a distribution device (10), wherein it has a support section (80) separate from the attachment section (70) for supporting a second cable catching device (50), which has a cable receptor (55) extending along its longitudinal axis (L) for an optical fibre cable (90), wherein at least one support form-fitting contour (85) is arranged on the support section (80) for the form-fitting support of the second cable catching device (50) transversely to its longitudinal axis (L), and wherein the at least one attachment form-fitting contour (75) and the at least one support form-fitting contour (85) comprise mutually complementary attachment form-fitting contours (75) and support form-fitting contours (85), so that the cable catching device can form a first cable catching device (50A) for form-fitting connection to a structurally identical second cable catching device (50B) and the attachment form-fitting contours (75) of the one cable catching device (50B) can engage in a form-fitting manner in the support form-fitting contours (85) of the other cable catching device (50A), **characterised in that** the attachment form-fitting contours (75) and the support form-fitting contours (85) are at a distance from each other parallel and/or transversely to the longitudinal axis (L) of the cable catching device (50), so that the cable catching device (50A) and the structurally identical second cable catching device (50B) can be engaged in a form-fitting manner to form a step arrangement.

2. Cable catching device (50) according to Claim 1, **characterised in that** it has a floor body (52) as well as side legs (53, 54) laterally projecting from the floor body (52) and/or that the attachment section (70) and the support section (80) are arranged on angularly disposed or opposing sides of the cable catching device, wherein the attachment section (70) and the support section (80) are arranged advantageously on the side legs (53, 54).

3. Cable catching device according to Claim 1 or 2, **characterised in that** the cable receptor (55) is designed as a receiving channel for receiving the at least one optical fibre cable (90) and/or that the attachment section (70) and/or the support section (80) has plane surfaces or level support surfaces (77, 87) and/or that the at least one attachment form-fitting contour (75) of the attachment section (70) comprises a plug-in projection (71,72) and/or a plug-in receptor (81, 82) and/or that the at least one support form-fitting contour (85) of the support section (80) comprises a plug-in projection (71, 72) and/or a plug-in receptor (81, 82).

4. Cable catching device according to Claim 3 **characterised in that** the at least one attachment form-fitting contour (75) comprises at least two plug-in projections (71, 72) and/or plug-in receptors (81, 82), which are spaced in relation to the longitudinal axis (L) of the cable catching device and/or transversely to the longitudinal axis (L) of the cable catching device, and/or that the at least one support form-fitting contour (85) comprises at least two plug-in projections (71, 72) and/or plug-in receptors (81, 82), which are spaced in relation to the longitudinal axis (L) of the cable catching device (50) and/or transversely to the longitudinal axis (L) of the cable catching device.

5. Cable catching device according to one of the previous Claims, **characterised in that** the at least one attachment form-fitting contour (75) comprises at least two attachment form-fitting contours (75), which are arranged next to each other along a series axis (R), running in particular parallel to the longitudinal axis (L) of the cable catching device, wherein it is advantageously provided that the at least two attachment form-fitting contours (75), arranged along the series axis (R), are plug-in projections (71, 72).

6. Cable catching device according to one of the previous Claims, **characterised in that** the at least one support form-fitting contour (85) comprises at least two support form-fitting contours (85), in particular plug-in receptors (81, 82), which are arranged next to each other along a series axis (R), running in particular parallel to the longitudinal axis (L) of the cable catching device.

7. Cable catching device according to one of the previous Claims, **characterised in that** the at least one attachment form-fitting contour (75) comprises at least one plug-in projection (71, 72), which is located in front of the cable catching device (50) parallel to a floor level in front of a base body of the cable catching device (50), wherein a floor of the cable receptor (55) is arranged in the area of the floor level, and/or that the at least one attachment form-fitting contour (75) comprises at least one plug-in receptor (81, 82), which extends inwards parallel to a floor level in a base body of the cable catching device (50), wherein a floor of the cable receptor (55) is arranged in the area of the floor level, and/or that the at least one attachment form-fitting contour (75) comprises an attachment bolt (73), in particular a screw, and/or that the at least one attachment form-fitting contour (75) of the attachment section (70) comprises a through-opening (74) for an attachment bolt (73), in particular a screw, wherein it is advantageously provided that the through-opening (74) is open laterally, transverse to a push-through axis, along which the attachment bolt can be pushed through the through-opening (74), so that the attachment bolt (73) can be inserted transverse to the push-through axis into the through-opening (74) and/or that an assembly through-opening (84), which is flush with the through-opening (74), in particular arranged on the support section (80) and/or passing through the support section (80), faces the through-opening (74), through which the attachment bolt (73) can be actuated by aid of an assembly tool.

8. Cable catching device according to one of the previous Claims, **characterised in that** the at least one attachment form-fitting contour (75) has at least one plug-in projection (71, 72) or at least one plug-in receptor (81, 82), wherein the at least one plug-in projection (71, 72) or the at least one plug-in receptor (81, 82) is arranged at a distance from the through-opening (74) for the attachment bolt (73) to form, with a rotational actuation of the attachment bolt (73), an anti-rotation lock of the cable catching device in relation to the support base (27) and/or that a length of the attachment bolt (73) is designed in a manner that the attachment bolt (73) can be partially screwed into the support base (27) or the other cable catching device (50) supporting the cable catching device (50) in a manner that makes engagement of the through-opening (74) with the attachment bolt (73) possible, without a plug-in receptor (81, 82) or a plug-in projection (71, 72) of the attachment form-fitting contours (75) engaging with a plug-in projection (71, 72) or a plug-in receptor (81, 82) on the support base (27) or the other cable catching device (50), wherein through a further screwing in of the attachment bolt (73) the plug-in projection (71, 72) can be engaged with a plug-in receptor (81, 82) of the support base (27) or the other cable catching device (50) or the plug-in receptor (81, 82) with a plug-in projection (71, 72) of the support base (27) or the other cable catching device (50).

9. Cable catching device according to one of the previous Claims, **characterised in that** the at least one support form-fitting contour (85) comprises a bolt receptor or a screw receptor (33, 83) to receive an attachment bolt (73).

10. Cable catching device according to one of the previous Claims, **characterised in that** the cable receptor (55) extends between opposing longitudinal end areas of the cable catching device (50).

11. Cable catching device according to one of the previous Claims, **characterised in that** the strain relief grip (60) comprises a clamping device (61), wherein it is advantageously provided that the clamping device (61) comprises a clamping body (62) adjustable between a releasing position and a clamping position, in particular designed as a clamping collar or as a clamping bracket, wherein the clamping body (62) in the releasing position releases a clamping receptor (64) of the clamping device (61), so that the strain relief element (93) is movable in relation to the clamping receptor (64), and in the clamping position constricts a plug-in cross-section of the clamping receptor (64) for clamping the strain relief element (93).

12. Cable catching device according to one of the previous Claims, **characterised in that** the strain relief grip (60) comprises a receiving contour (66) for receiving a flexible fastening strap (185), in particular a cable tie, and/or that it has at least one retaining contour (57) for retaining a flexible fastening strap (185), with which the optical fibre-cable (90) can be fixed in the cable receptor (55), wherein it is advantageously provided that the at least one retaining contour (57) and the strain relief grip (60) are at a distance from each other in relation to the longitudinal axis (L) of the cable catching device (50) and/or, in relation to the longitudinal axis (L) of the cable catching device (50), the at least one retaining contour (57) and the strain relief grip (60) are arranged in opposing longitudinal end areas of the cable catching device (50).

13. Distribution device (10) with a cable catching device according to one of the previous Claims, wherein the distribution device (10) has the support base (27) for the cable catching device (50).

14. Distribution device (10) according to Claim 13, **characterised in that** at least one support form-fitting contour (830) is arranged on the support base (27) for the form-fitting reception of the at least one attachment form-fitting contour (75) of the cable catching device (50) and/or that at least two support form-fitting contours (30), in particular at least one plug-in receptor (31,32) and/or at least one screw receptor (33), in particular arranged next to each other in a row direction, are arranged on the support base (27) for the form-fitting reception of the attachment form-fitting contours (75) of two cable catching devices (50) and/or that it is designed as a splice closure or has a splice closure and/or that it is designed as a distribution box or has a distribution box and/or that it is designed as a distributor housing or has a distributor housing.

15. Distribution device according to one of Claims 13 or 14, **characterised in that** the support base (27) is arranged on a carrier (20), which has a plurality of retainers for distribution modules (21) for the distribution of, in particular for the splicing of, optical fibres, wherein it is advantageously provided that the support base (27) is arranged on a support, by which the carrier (20) for the distribution modules (21) is supported on a distributor housing (19) of the distribution device (10), in particular a housing base (11) of the distributor housing (19).

## Revendications

1. Dispositif d'arrêt de câble pour l'arrêt d'au moins un câble à fibres optiques (90), dans lequel le dispositif d'arrêt de câble (50) présente un logement de câble (55) pour le logement d'au moins un câble (90), dans lequel le câble (90) présente au moins un brin (92) avec des fibres optiques et au moins un élément de décharge de traction (93) s'étendant le long d'une étendue longitudinale du câble (90), dans lequel le logement de câble (55) s'étend le long d'un axe longitudinal (L) du dispositif d'arrêt de câble (50), dans lequel le dispositif d'arrêt de câble (50) présente un moyen de fixation de décharge de traction (60) pour la fixation résistante à la traction de l'au moins un élément de décharge de traction (93) par rapport à l'axe longitudinal (L) du dispositif d'arrêt de câble (50), dans lequel le dispositif d'arrêt de câble (50) présente une partie de fixation (70) avec au moins un contour à complémentarité de formes de fixation (75) pour l'appui à complémentarité de formes du dispositif d'arrêt de câble (50) transversalement à son axe longitudinal (L) contre une base d'appui (27), en particulier un dispositif de distribution (10), dans lequel il présente une partie d'appui (80) séparée de la partie de fixation (70) pour l'appui d'un second dispositif d'arrêt de câble (50) qui présente un logement de câble (55) s'étendant le long de son axe longitudinal (L) pour un câble à fibres optiques (90), dans lequel au moins un contour à complémentarité de formes d'appui (85) est agencé au niveau de la partie d'appui (80) pour l'appui par complémentarité de formes du second dispositif d'arrêt de câble (50) transversalement à son axe longitudinal (L), et dans lequel l'au moins un contour à complémentarité de formes de fixation (75) et l'au moins un contour à complémentarité de formes d'appui (85) comprennent des contours à complémentarité de formes de fixation (75) et des contours à complémentarité de formes d'appui (85) complémentaires les uns aux autres de sorte que le dispositif d'arrêt de câble puisse former un premier dispositif d'arrêt de câble (50A) pour la liaison par complémentarité de formes avec un second dispositif d'arrêt de câble (50B) de même construction et les contours à complémentarité de formes de fixation (75) de l'un dispositif d'arrêt de câble (50B) puissent s'engager par complémentarité de formes dans les contours à complémentarité de formes d'appui (85) de l'autre dispositif d'arrêt de câble (50A), **caractérisé en ce que** les contours à complémentarité de formes de fixation (75) et les contours à complémentarité de formes d'appui (85) présentent une distance parallèle et/ou transversale à l'axe longitudinal (L) du dispositif d'arrêt de câble (50) les uns par rapport aux autres de sorte que le dispositif d'arrêt de câble (50A) et le second dispositif d'arrêt de câble (50B) de même construction que celui-ci puissent être amenés en prise par complémentarité de formes en formant un agencement étagé.

2. Dispositif d'arrêt de câble (50) selon la revendication 1, **caractérisé en ce qu'**il présente un corps de fond (52) ainsi que des branches latérales (53, 54) dépassant latéralement du corps de fond (52) et/ou **en ce que** la partie de fixation (70) et la partie d'appui (80) sont agencées au niveau de côtés angulaires ou opposés l'un à l'autre du dispositif d'arrêt de câble, dans lequel la partie de fixation (70) et la partie d'appui (80) sont agencées avantageusement au niveau des branches latérales (53, 54).

3. Dispositif d'arrêt de câble selon la revendication 1 ou 2, **caractérisé en ce que** le logement de câble (55) est configuré en tant que canal de logement pour le logement de l'au moins un câble à fibres optiques (90) et/ou **en ce que** la partie de fixation (70) et/ou la partie d'appui (80) présentent des surfaces planes ou surfaces d'appui planes (77, 87) et/ou **en ce que** l'au moins un contour à complémentarité de formes de fixation (75) de la partie de fixation (70) comprend une saillie d'enfichage (71, 72) et/ou un logement d'enfichage (81, 82) et/ou **en ce que** l'au moins un contour à complémentarité de formes d'appui (85) de la partie d'appui (80) comprend une saillie d'enfichage (71, 72) et/ou un logement d'enfichage (81, 82).

4. Dispositif d'arrêt de câble selon la revendication 3, **caractérisé en ce que** l'au moins un contour à complémentarité de formes de fixation (75) comprend au moins deux saillies d'enfichage (71, 72) et/ou logements d'enfichage (81, 82) qui présentent une distance par rapport à l'axe longitudinal (L) du dispositif d'arrêt de câble et/ou transversalement à l'axe longitudinal (L) du dispositif d'arrêt de câble, et/ou **en ce que** l'au moins un contour à complémentarité de formes d'appui (85) comprend au moins deux saillies d'enfichage (71, 72) et/ou logements d'enfichage (81, 82) qui présentent une distance par rapport à l'axe longitudinal (L) du dispositif d'arrêt de câble (50) et/ou transversalement à l'axe longitudinal (L) du dispositif d'arrêt de câble.

5. Dispositif d'arrêt de câble selon l'une quelconque des revendications précédentes, **caractérisé en ce que** l'au moins un contour à complémentarité de formes de fixation (75) comprend au moins deux contours à complémentarité de formes de fixation (75) qui sont agencés le long d'un axe de rangée (R) s'étendant en particulier parallèlement à l'axe longitudinal (L) du dispositif d'arrêt de câble l'un à côté de l'autre, dans lequel il est avantageusement prévu que les au moins deux contours à complémentarité de formes de fixation (75) agencés le long de l'axe de rangée (R) soient des saillies d'enfichage (71, 72).

6. Dispositif d'arrêt de câble selon l'une quelconque des revendications précédentes, **caractérisé en ce que** l'au moins un contour à complémentarité de formes d'appui (85) comprend au moins deux contours à complémentarité de formes d'appui (85), en particulier logements d'enfichage (81, 82) qui sont agencés le long d'un sens de rangée (R) s'étendant en particulier parallèlement à l'axe longitudinal (L) du dispositif d'arrêt de câble l'un à côté de l'autre.

7. Dispositif d'arrêt de câble selon l'une quelconque des revendications précédentes, **caractérisé en ce que** l'au moins un contour à complémentarité de formes de fixation (75) comprend au moins une saillie d'enfichage (71, 72) qui fait saillie devant le dispositif d'arrêt de câble (50) parallèlement à un plan de fond devant un corps de base du dispositif d'arrêt de câble (50), dans lequel un fond du logement de câble (55) est agencé dans la zone du plan de fond, et/ou **en ce que** l'au moins un contour à complémentarité de formes de fixation (75) comprend au moins un logement d'enfichage (81, 82) qui s'étend parallèlement à un plan de fond dans un corps de base du dispositif d'arrêt de câble (50), dans lequel un fond du logement de câble (55) est agencé dans la zone du plan de fond, et/ou **en ce que** l'au moins un contour à complémentarité de formes de fixation (75) comprend un boulon de fixation (73), en particulier une vis et/ou **en ce que** l'au moins un contour à complémentarité de formes de fixation (75) de la partie de fixation (70) comprend une ouverture d'enfichage (74) pour un boulon de fixation (73), en particulier une vis, dans lequel il est avantageusement prévu que l'ouverture d'enfichage (74) soit latéralement ouvert transversalement à un axe d'enfichage, le long duquel le boulon de fixation peut être enfiché à travers l'ouverture d'enfichage (74) de sorte que le boulon de fixation (73) puisse être introduit transversalement à l'axe d'enfichage dans l'ouverture d'enfichage (74) et/ou **en ce qu'**à l'ouverture d'enfichage (74) fait face une ouverture de passage de montage (84) s'alignant sur l'ouverture d'enfichage (74), agencée en particulier au niveau de la partie d'appui (80) et/ou traversant la partie d'appui (80), à travers laquelle le boulon de fixation (73) peut être actionné à l'aide d'un outil de montage.

8. Dispositif d'arrêt de câble selon l'une quelconque des revendications précédentes, **caractérisé en ce que** l'au moins un contour à complémentarité de formes de fixation (75) présente au moins une saillie d'enfichage (71, 72) ou au moins un logement d'enfichage (81, 82), dans lequel l'au moins une saillie d'enfichage (71, 72) ou l'au moins un logement d'enfichage (81, 82) est agencé à une distance de l'ouverture d'enfichage (74) pour le boulon de fixation (73) pour la formation d'un dispositif antirotation du dispositif d'arrêt de câble par rapport à la base d'appui (27) lors d'un actionnement rotatif du boulon de fixation (73), et/ou **en ce qu'**une longueur du boulon de fixation (73) est configurée de telle manière que le boulon de fixation (73) puisse être vissé partiellement dans la base d'appui (27) ou l'autre dispositif d'arrêt de câble (50) appuyant le dispositif d'arrêt de câble (50) de telle manière qu'une prise de l'ouverture d'enfichage (74) avec le boulon de fixation (73) soit possible sans qu'un logement d'enfichage (81, 82) ou une saillie d'enfichage (71, 72) des contours à complémentarité de formes de fixation (75) ne parvienne en prise avec une saillie d'enfichage (71, 72) ou un logement d'enfichage (81, 82) au niveau de la base d'appui (27) ou l'autre dispositif d'arrêt de câble (50), dans lequel la saillie d'enfichage (71, 72) peut être amenée en prise par la suite du vissage du boulon de fixation (73) avec un logement d'enfichage (81, 82) de la base d'appui (27) ou de l'autre dispositif d'arrêt de câble (50) ou le logement d'appui (81, 82) peut être amené en prise avec une saillie d'enfichage (71, 72) de la base d'appui (27) ou de l'autre dispositif d'arrêt de câble (50).

9. Dispositif d'arrêt de câble selon l'une quelconque des revendications précédentes, **caractérisé en ce que** l'au moins un contour à complémentarité de formes d'appui (85) comprend un logement de boulon ou un logement de vis (33, 83) pour le logement d'un boulon de fixation (73).

10. Dispositif d'arrêt de câble selon l'une quelconque des revendications précédentes, **caractérisé en ce que** le logement de câble (55) s'étend entre des zones d'extrémité longitudinale opposées l'une à l'autre du dispositif d'arrêt de câble (50).

11. Dispositif d'arrêt de câble selon l'une quelconque des revendications précédentes, **caractérisé en ce que** le moyen de fixation de décharge de traction (60) comprend un dispositif de serrage (61), dans lequel il est avantageusement prévu que le dispositif de serrage (61) comprenne un corps de serrage (62) réglable entre une position de détachement et une position de serrage, configuré en particulier en tant que collier de serrage ou en tant qu'étrier de serrage, dans lequel le corps de serrage (62) libère dans la position de détachement un logement de serrage (64) du dispositif de serrage (61) de sorte que l'élément de décharge de traction (93) rétrécisse une section transversale d'enfichage du logement de serrage (64) pour le serrage de l'élément de décharge de traction (93).

12. Dispositif d'arrêt de câble selon l'une quelconque des revendications précédentes, **caractérisé en ce que** le moyen de fixation de décharge de traction (60) comprend un contour de logement (66) pour le logement d'une bande de fixation (185) flexible, en particulier d'un serre-câble et/ou **en ce qu'**il présente au moins un contour de retenue (57) pour la retenue d'une bande de fixation (185) flexible, avec lequel le câble à fibres optiques (90) peut être fixé dans le logement de câble (55), dans lequel il est avantageusement prévu que l'au moins un contour de retenue (57) et le moyen de fixation de décharge de traction (60) présentent par rapport à l'axe longitudinal (L) du dispositif d'arrêt de câble (50) une distance l'un de l'autre et/ou l'au moins un contour de retenue (57) et le moyen de fixation de décharge de traction (60) sont agencés par rapport à l'axe longitudinal (L) du dispositif d'arrêt de câble (50) des zones d'extrémité longitudinale opposées l'une à l'autre du dispositif d'arrêt de câble (50).

13. Dispositif de distribution (10) avec un dispositif d'arrêt de câble selon l'une quelconque des revendications précédentes, dans lequel le dispositif de distribution (10) présente la base d'appui (27) pour le dispositif d'arrêt de câble (50).

14. Dispositif de distribution (10) selon la revendication 13, **caractérisé en ce qu'**au niveau de la base d'appui (27), au moins un contour à complémentarité de formes d'appui (830) est agencé pour le logement par complémentarité de formes de l'au moins un contour à complémentarité de formes de fixation (75) du dispositif d'arrêt de câble (50) et/ou **en ce qu'**au niveau de la base d'appui (27), au moins deux contours à complémentarité de formes d'appui (30) agencés en particulier dans un sens de rangée l'un à côté de l'autre, en particulier au moins un logement d'enfichage (31, 32) et/ou au moins un logement de vis (33), sont agencés pour le logement par complémentarité de formes des contours à complémentarité de formes de fixation (75) de deux dispositifs d'arrêt de câble (50) et/ou **en ce qu'**il est configuré en tant que manchon épissé ou présente un manchon épissé et/ou **en ce qu'**il est configuré en tant que bloc de distribution ou présente un bloc de distribution et/ou **en ce qu'**il est configuré en tant que boîtier de distribution ou présente un boîtier de distribution.

15. Dispositif de distribution selon l'une quelconque des revendications 13 ou 14, **caractérisé en ce que** la base d'appui (27) est agencée au niveau d'un support (20) qui présente plusieurs supports pour des modules de distribution (21) pour la distribution, en particulier pour l'épissure, de fibres optiques, dans lequel il est avantageusement prévu que la base d'appui (27) soit agencée au niveau d'un appui, avec lequel le support (20) pour les modules de distribution (21) est en appui contre un boîtier de distribution (19) du dispositif de distribution (10), en particulier d'une base de boîtier (11) du boîtier de distribution (19).
